# EUROPEAN PATENT SPECIFICATION

(11) **EP 2 865 302 B1**
(45) Date of publication and mention of the grant of the patent: **03.02.2016**
(21) Application number: 14189065.7
(22) Date of filing: 15.10.2014
(51) Int. Cl.: A47J 31/44

(54) **Device for identification of a filter holder of an espresso coffee machine**
Vorrichtung zur Identifizierung eines Filterhalters einer Espressokaffeemaschine
Dispositif pour l'identification d'un porte-filtre d'une machine à café expresso

(30) Priority: 28.10.2013 IT MI20131791
(43) Date of publication of application: 29.04.2015
(73) Proprietor: Gruppo Cimbali S.p.A., 20082 Binasco (MI) (IT)
(72) Inventor: ERBA, Roberto, 20082 Binasco MI (IT)
(74) Representative: Perani, Aurelio

(56) References cited:
- EP-A1- 0 280 594
- WO-A1-2010/130611
- US-A1- 2010 263 546
- US-A1- 2011 094 391
- US-A1- 2013 144 563

## Description

The present invention relates to a device for identification of a filter holder of an espresso coffee machine, comprising a support on which the filter holder to be identified is removably placed, said filter holder being provided with at least one beverage dispensing spout, at least one radiation sensor having at least one heat radiation-sensitive element, which is able to generate an electric signal representative of the heat radiation that has been sensed, an optical apparatus that focuses radiations on said at least one sensitive element and circuit means connected to said at least one heat radiation-sensitive element to receive the electric signals generated by said at least one sensitive element and process a corresponding output signal.

As is known, an espresso coffee machine is required to dispense various types of coffee-based beverages according to the tastes and traditions of various countries, requiring different amounts of coffee grounds or doses, possibly also with different grinding degrees or particle sizes.

It is also known that the filter holders of the machine are only loaded with coffee grounds by the operator during beverage preparation, by picking up the filter holder from its respective dispensing unit of the machine and placing it in its support located in the doser and grinder device.

In doing so, the operator has to select the particular filter holder, the type of blend and the dose, according to the requested type of beverage.

For example, if an Italian concentrated espresso coffee known as "ristretto" is requested, the operator shall use a single-cup filter holder, withdraw an appropriate dose of Italian roasted coffee, specially ground for Italian espresso, from the coffee grinder, introduce it into the machine at an espresso-calibrated dispenser, select dispensing of a small amount of water and finally use an adequate cup to collect the dispensed beverage.

If the request is for two moussy coffees known as "caffè crème", a two-cup filter holder will be used, with a blonde roast coffee, specially ground for caffè crème, an amount of water required for two long doses, and large cups.

Considering that high-quality coffee bars may provide more than two varieties of coffee blends, the Italian espresso may be served in long or short shots, and machine dispensers dispense one or typically two coffees, it will be understood that, especially under intensive work conditions, the operator may take a wrong step and start dispensing a dose of caffè crème after mistakenly withdrawing a dose of coffee grounds for Italian espresso, or start dispensing two "ristrettos" after withdrawing two doses of blonde roast blends for caffè crème.

Therefore, it is important to determine whether one or two beverage dispensing spouts are present in the filter holder, i.e. to identify a single-dose or double-dose filter holder respectively.

The prior art provides various solutions to assist the operator in not mistaking the requested beverage type, such as those disclosed in EP-A- 0 280 594, EP-A- 2 314 188 or WO 2010 130 611 A1.

In these prior art solutions, filter holders are identifiable by means of a mechanical, optical, magnetic or even radio label, which is identified by the ground coffee dose loading device or by a special dispenser of the coffee machine.

Nevertheless, the presence of a label on the filter holder, for identification thereof, causes drawbacks, as high mechanical and thermal stresses are involved when handling the filter holder.

In order to eject the spent grounds at the end of a dispensing operation, the filter holder is knocked against a wooden or rubber bar spanning over the box for spent grounds and, during operation, it is typically coupled to the dispenser unit of the machine, where temperatures range from 70 to 85°C.

Finally, it is washed daily, thereby receiving chemical and is thus exposed to chemical and abrasive stresses, which damage the labels on the filter holder.

Therefore, the object of the present invention is to provide a solution for identification of the filter holder of an espresso coffee machine that requires no label on the filter holder.

This object is fulfilled by a device as defined below in claim 1.

The invention will be now described in greater detail with reference to certain preferred embodiments thereof, given by way of illustration and without limitation, and shown in the annexed drawings, in which:
- Figure 1 shows a diagrammatic perspective view of a first embodiment of the device of the invention during identification of a double-dose filter holder with a double-spout outlet, the device being placed at a dispenser unit of an espresso coffee machine;
- Figure 2 shows a diagrammatic perspective view of the device of Figure 1 during identification of a single-dose filter holder, with a single-spout outlet;
- Figure 3 shows a diagrammatic perspective view of a device of the invention according to its first embodiment, during identification of a single-dose filter holder with a single-spout outlet, the device being placed at the ground coffee loading area of a grinder-doser;
- Figure 4 shows a diagrammatic perspective view of a device of the invention according to a second embodiment, during identification of a double-dose filter holder with a double-spout outlet, the device being placed at the ground coffee loading area of a grinding and dosing apparatus;
- Figure 5 shows a diagrammatic perspective view of a device of the invention according to its second embodiment, during identification of a double-dose filter holder with a double-spout outlet, the device being placed at a dispenser unit of an espresso coffee machine;
- Figure 6 shows a diagrammatic perspective view of a device of the invention according to its second embodiment, during identification of a single-dose filter holder with a single-spout outlet, the device being placed at a dispenser unit of an espresso coffee machine;
- Figure 7 diagrammatically shows the functional parts of the radiation sensor as used in the embodiments of the invention;
- Figure 8 shows the type of indication given by the device of the invention in case of identification of a double-spout filter holder;
- Figure 9 shows the type of indication given by the device of the invention in case of identification of a single-spout filter holder.

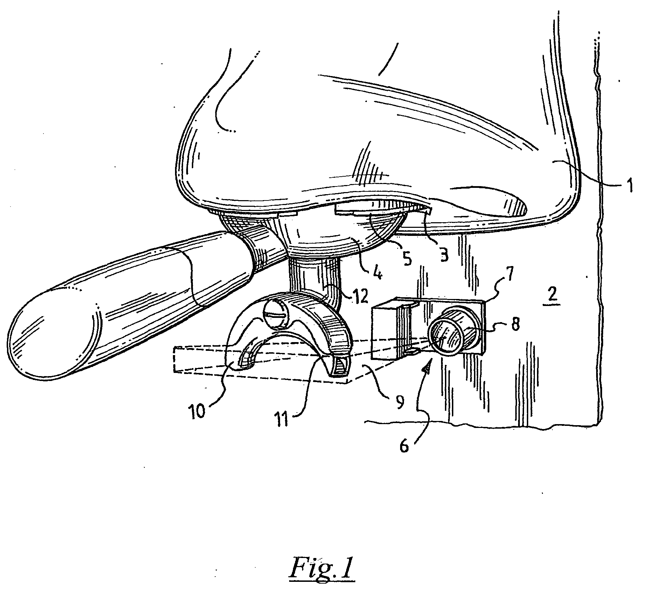

Referring to the above mentioned figures and particularly to Figure 1, numeral 1 diagrammatically designates a traditional dispenser of an espresso coffee machine, with the wall from which the dispenser projects being designated by numeral 2.

The dispenser 1 comprises a support 3 with which a filter holder 4 engages.

The engagement of the filter holder 4 with the support 3 is conventionally obtsained by means of wings 5 disposed at the periphery of the filter holder.

According to a first embodiment of the invention, the device comprises a thermopile heat radiation sensor, generally referenced 6, e.g. the sensor sold by EXCELITAS TECHNOLOGIES and known as TPiL 8T 2246 L3.9 OAA060 or an equivalent thereof, such as that disclosed in US 2013/0144563 A1

The sensor 6 is attached, for instance, to the wall 2 of the coffee machine that has the dispenser unit 1 fixed thereto.

Otherwise, the sensor 6 may be attached to a self-standing support, not shown.

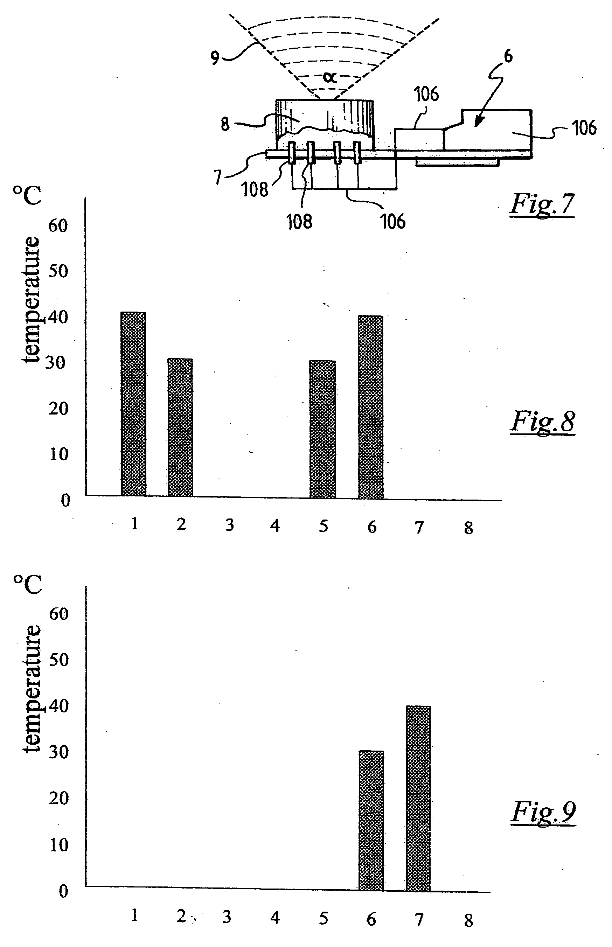

The sensor 6 is attached to the wall 2, for example, through the terminal block 7 of the sensor, which has thereon the optical apparatus 8 that focuses the heat radiation emitted from the filter holder to be identified on sensitive elements, referenced 108, placed on the same terminal block 7 of the sensor 6 (see Fig. 7).

Also the circuit means, referenced 106 (see Fig. 7) which are connected to the elements 108 and receive the electric signals transmitted therefrom and process corresponding output signals, may be housed on the same terminal block 7 of the sensor 6.

According to the invention, the terminal block 7 is placed in such position that the optical apparatus 8 turns its detection cone 9 toward the spouts 10 and 11 of the outlet 12 of the filter holder.

In the case of Figure 1, a conventional filter holder is shown which must contain a double dose of ground coffee for use, and hence has two beverage dispensing spouts.

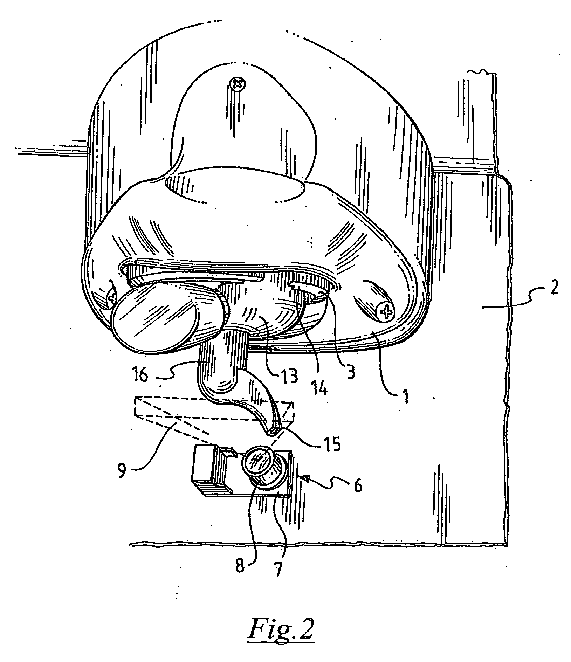

Referring to Figure 2, in which structural elements corresponding to those of Figure 1 are designated by the same numerals, the filter holder 13, with its wings 14 for engagement with the support 3 of the dispenser 1, has a single spout 15 branching off the outlet 16.

Therefore, this filter holder must contain a single dose of ground coffee for use.

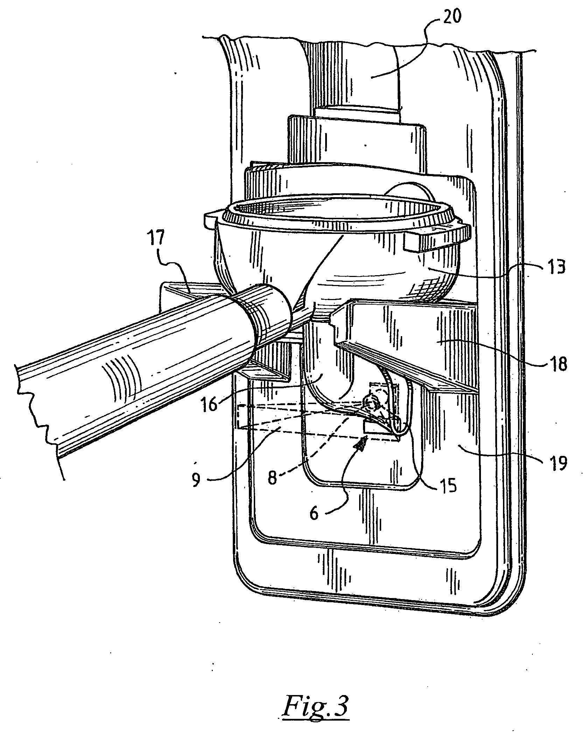

Referring to Figure 3, the device of the invention comprises, as a support for the filter holder to be identified, a pair of brackets 17 and 18 which project out of the wall 19 of a grinding and dosing apparatus whose ground coffee outlet is schematically referenced 20.

The filter holder as shown in Figure 3 corresponds to the single-dose filter holder 13 of Figure 2, with a single beverage dispensing spout 15, during beverage preparation. Under the support consisting of the brackets 17 and 18 of the grinding and dosing apparatus, the device comprises a sensor 6.

The cone of vision 9 of the latter is turned toward the filter holder 13 to intercept the body of the spout 15.

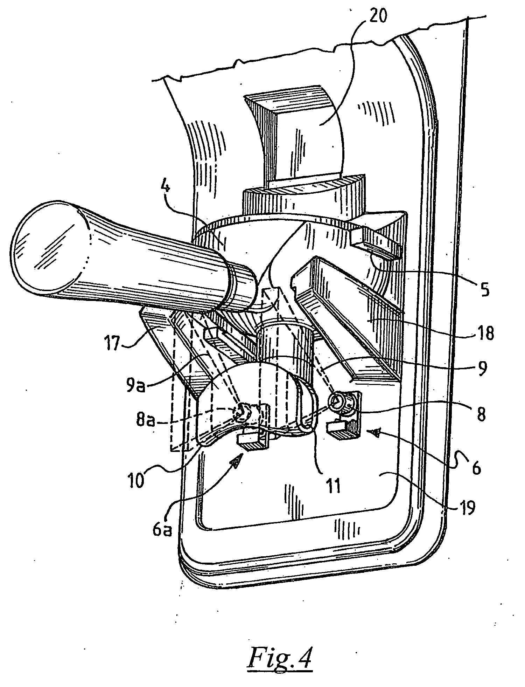

Referring to Figure 4 and according to a second embodiment of the invention, in case of attachment to a coffee grinding and dosing apparatus, the filter holder identification device comprises, under the brackets 17 and 18 for supporting the filter holder, two heat radiation sensors, referenced 6 and 6a, whose optical apparatus 8 and 8a, with their respective conical heat radiation detection fields, intercept respective outlet spouts 10 and 11 of the outlet 12 of the filter holder 4 which, in the example of Figure 4, is of the double-dose type, like that of Figure 1.

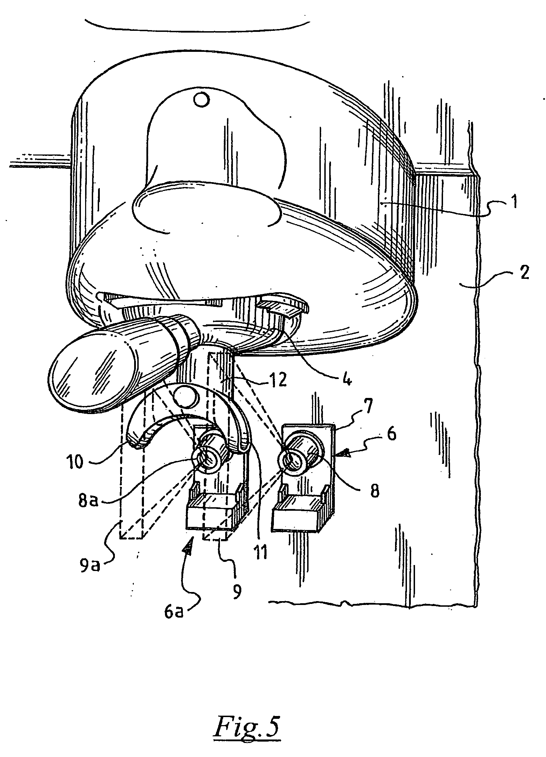

Referring to Figure 5 and according to the second embodiment of the invention, the filter holder identification device comprises two heat radiation sensors, referenced 6 and 6a respectively, which are attached to the wall 2 of an espresso coffee machine beneath a dispenser 1, with the respective conical detection fields 9 and 9a of the optical apparatus 8 and 8a turned toward the spout 10 and the spout 11 respectively of the filter holder 4 which, in Figure 5, corresponds to the that with two spouts 10 and 11 as shown in Figure 1.

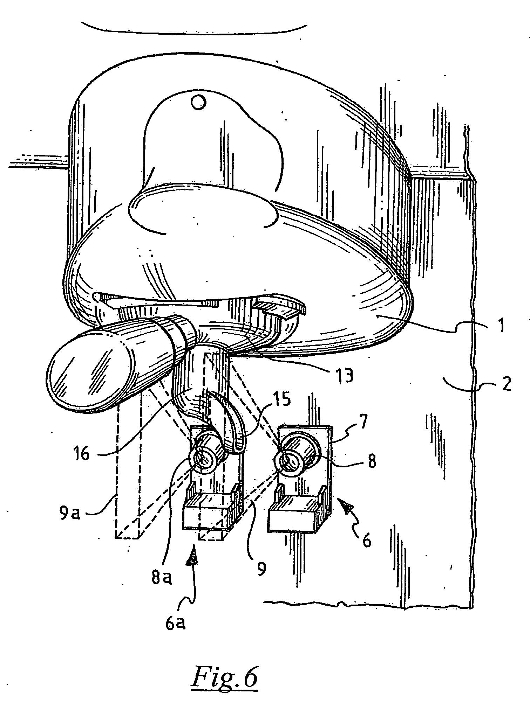

Referring now to Figure 6, a device according to the second embodiment of the invention as shown in Figure 5 is exemplified during identification of a filter holder 13 with a single spout 15, associated with a dispenser 1 of an espresso coffee machine.

It will be appreciated from the above that the device of the invention may be used to identify a type of filter holder even when the latter has no label thereon.

As shown in Figure 7, the device of the invention according to its first embodiment, can use the sensor 6 to sense the temperature of the filter holder spouts, which fall within the field of view 9, having an aperture angle α, of its optical apparatus 8, and to release information, as electric signals proportional to the temperature of the spouts, while also showing their spatial arrangement in said field of view 9, which obviously depends on whether one or two spouts are provided.

The signals emitted from the sensor 6 are processed by an electronic unit which generates a representation. e.g. a bar graph, of a double-spout filter holder as shown in Figure 8, or a single-spout filter holder, as shown in the graph of Figure 9.

These signals, which provide identification of the filter holder type, in case of attachment to a grinding and dosing apparatus, can instruct the latter to load the filter holder with the appropriate dose of ground coffee.

If the device of the invention is attached to a dispenser of an espresso coffee machine, the same filter holder identification signals will be used to automatically supply the proper amount of hot water to the dispenser, such that the filter holders receive the proper dose of water, according to their types, without risking that a wrong control imparted by the operator may lead to a wrong dose administration.

The signals emitted from the sensors 6, which are also indicative of the temperature at the filter holder spouts, may be also employed to prevent hot water dispensing, and hence beverage preparation, if an insufficient temperature is found in the filter holder spouts, to indicate that the filter holder is too cold, which might affect the quality of the dispensed beverage.

Nevertheless, the magnitude of the signals emitted from the sensor shall also be accounted for when designing the device, because it also depends on the amount of heat radiations emitted from the filter holder body, which in turn depends on the degree of reflection of the outer surface of the filter holder, on its color and the material of which it is made.

The operation and purposes of the device according to the second embodiment of the invention do not differ from those described with reference to the first embodiment. Since the field of view 9 of the optical apparatus 8 of the sensor 6 is characterized by a given angle α, geometric positioning constraints apply, for the filter holder spouts to be identified to entirely fall within such field of view.

If a new apparatus is designed, these requirements of the device may be accounted for, such that the sensor holding structure 6 and the filter holder support may be properly designed for the use of a single sensor 6, like in the case of the first embodiment of the invention.

In case of use with existing apparatus or with apparatus that require particular geometries for the filter holder support structure, an identification device comprising a pair of sensors 6 and 6a, like in the second embodiment of the invention, may be technically more advantageous.

Of course, the filter holder identification signals obtained with the device of the invention may be used to exchange filter holder type information between different machines, such as a grinding and dosing apparatus and an espresso coffee machine, by sending information to the latter about the type of filter holder that has been loaded and preventing delivery of doses of hot water for beverage preparation other than the proper one for the dose contained in the filter holder when the latter is introduced into the dispensers of the coffee machine.

While the filter holder identification device has been described above with exemplary reference to incorporation thereof in a coffee grinding and dosing apparatus and in an espresso coffee machine, it may be obviously provided as a self-standing structure, separate both from the grinding and dosing apparatus and from the coffee machine, and able to interact with them by sending a signal corresponding to the identified filter holder type to either or both of them.

## Claims

1. A device for identification of a filter holder (4, 13) of an espresso coffee machine, comprising a support (3, 17, 18) on which the filter holder to be identified is removably placed, said filter holder being provided with at least one beverage dispensing spout (10, 11), at least one radiation sensor (6, 6a) having at least one heat radiation-sensitive element (108), which is adapted to generate an electric signal representative of the heat radiation that has been sensed, an optical apparatus (8, 8a) that focuses radiations on said at least one sensitive element and circuit means (106) connected to said at least one heat radiation-sensitive element to receive the electric signals generated by said at least one sensitive element and process a corresponding output signal, **characterized in that** said radiation sensor (6, 6a) is placed, relative to the support (3, 17, 18) for the filter holder to be identified, such that when the latter is placed on the support, at least one portion of said beverage dispensing spout falls within the field of view (9, 9a) of the optical apparatus (8, 8a) of said sensor, such that said circuit means can determine a signal representative of the radiations emitted from the spout portion detected by said optical apparatus of the sensor.

2. A device according to claim 1, **characterized in that** said filter holder is a double-dose filter holder and comprises two beverage dispensing spouts (10, 11).

3. A device according to claim 1, **characterized in that** said filter holder is a single-dose filter holder and comprises one beverage dispensing spout (15).

4. A device according to any of claims 1 to 3, **characterized in that** it comprises two radiation sensors (6, 6a), each sensor being placed, relative to the support (3, 17, 18) for the filter holder to be identified, such that when the latter is placed on the support, respective portions (10, 11, 15) of at least one beverage dispensing spout fall within the field of view (9, 9a) of the optical apparatus (8, 8a) of a respective sensor of said two sensors.

5. A device according to claim 1, **characterized in that** said radiation sensor (6, 6a) comprises a plurality of heat radiation-sensitive elements (108).

6. A device according to claim 5, **characterized in that** said heat radiation-sensitive elements (108) are of the thermopile type.

7. A coffee grinding and dosing apparatus comprising a device for the identification of a filter holder of an expresso coffee machine wherein said device is characterized according to any one of claims from 1 to 6.

8. An espresso coffee machine comprising a device for the identification of a filter holder of the expresso coffee machine wherein said device is characterized according any one of claims from 1 to 6.

## Patentansprüche

1. Vorrichtung zur Identifizierung eines Filterhalters (4, 13) einer Espressomaschine, umfassend eine Halterung (3, 17, 18), auf der der zu identifizierende Filterhalter abnehmbar angeordnet ist, wobei der Filterhalter versehen ist mit mindestens einem Getränkeauslauf (10, 11), mindestens einem Strahlensensor (6, 6a), der mindestens ein wärmestrahlungsempfindliches Element (108) aufweist, das dazu geeignet ist, ein elektrisches Signal zu erzeugen, welches die erfasste Wärmestrahlung signalisiert, einen optischen Apparat (8, 8a), der die Strahlung auf das mindestens eine empfindliche Element bündelt, und Schaltkreismittel (106), die mit dem mindestens einen wärmestrahlungsempfindlichen Element verbunden sind, um die von dem mindestens einen empfindlichen Element erzeugten elektrischen Signale zu empfangen und ein entsprechendes Ausgangssignal zu verarbeiten, **dadurch gekennzeichnet, dass** der Strahlensensor (6, 6a) - bezogen auf die Halterung (3, 17, 18) für den zu identifizierenden Filterhalter - derart angeordnet ist, dass wenn Letzterer auf der Halterung angeordnet wird, mindestens eine Portion aus dem Getränkeauslauf in den Erfassungsbereich (9, 9a) des optischen Apparats (8, 8a) des Sensors fällt, so dass die Schaltkreismittel ein Signal erfassen können, welches die von dem Auslaufanteil emittierte Strahlung darstellt, die von dem optischen Apparat des Sensors ermittelt wird.

2. Vorrichtung nach Anspruch 1, **dadurch gekennzeichnet, dass** der Filterhalter ein Doppeldosis-Filterhalter ist und zwei Getränkeausläufe (10, 11) umfasst.

3. Vorrichtung nach Anspruch 1, **dadurch gekennzeichnet, dass** der Filterhalter ein Einzeldosis-Filterhalter ist und einen Getränkeauslauf (15) umfasst.

4. Vorrichtung nach einem beliebigen der Ansprüche 1 bis 3, **dadurch gekennzeichnet, dass** sie zwei Strahlensensoren (6, 6a) umfasst, die jeweils bezogen auf die Halterung (3, 17, 18) für den zu identifizierenden Filterhalter derart angeordnet werden, dass bei Anordnung des Letztgenannten auf der Halterung entsprechende Portionen (10, 11, 15) des mindestens einen Getränkeauslaufs in den Erfassungsbereich (9, 9a) des optischen Apparats (8, 8a) eines jeweiligen Sensors der zwei Sensoren fallen.

5. Vorrichtung nach Anspruch 1, **dadurch gekennzeichnet, dass** der Strahlensensor (6, 6a) eine Vielzahl von wärmestrahlungsempfindlichen Elementen (108) umfasst.

6. Vorrichtung nach Anspruch 5, **dadurch gekennzeichnet, dass** die wärmestrahlungsempfindlichen Elemente (108) vom Thermosäulen-Typ sind.

7. Kaffeemahl- und -dosierapparat umfassend eine Vorrichtung zur Identifizierung eines Filterhalters einer Espressomaschine, wobei die Vorrichtung durch einen beliebigen der Ansprüche 1 bis 6 gekennzeichnet ist.

8. Espressomaschine umfassend eine Vorrichtung zur Identifizierung eines Filterhalters der Espressomaschine, wobei die Vorrichtung durch einen beliebigen der Ansprüche 1 bis 6 gekennzeichnet ist.

## Revendications

1. Dispositif pour l'identification d'un porte-filtre (4, 13) d'une machine à café expresso, comprenant un support (3, 17, 18) sur lequel le porte-filtre à identifier est placé de manière amovible, ledit porte-filtre étant muni d'au moins une buse de distribution de boisson (10, 11), d'au moins un capteur de rayonnement (6, 6a) comportant au moins un élément sensible au rayonnement de chaleur (108), qui est adapté pour générer un signal électrique représentatif du rayonnement de chaleur qui a été détecté, un appareil optique (8, 8a) qui concentre des rayonnements sur ledit au moins un élément sensible et des moyens de circuit (106) connectés audit au moins un élément sensible au rayonnement de chaleur pour recevoir des signaux électriques générés par ledit au moins un élément sensible et traiter un signal de sortie correspondant, **caractérisé en ce que** ledit capteur de rayonnement (6, 6a) est placé, par rapport au support (3, 17, 18) pour le porte-filtre à identifier, de manière que, quand ce dernier est placé sur le support, au moins une portion de ladite buse de distribution de boisson se trouve dans le champ de vision (9, 9a) de l'appareil optique (8, 8a) dudit capteur, de manière que lesdits moyens de circuit puissent déterminer un signal représentatif des rayonnements émis à partir de la portion de buse détectée par ledit appareil optique du capteur.

2. Dispositif selon la revendication 1, **caractérisé en ce que** ledit porte-filtre est un porte-filtre à double dose et comprend deux buses de distribution de boisson (10, 11).

3. Dispositif selon la revendication 1, **caractérisé en ce que** ledit porte-filtre est un porte-filtre à simple dose et comprend une buse de distribution de boisson (15).

4. Dispositif selon l'une quelconque des revendications 1 à 3, **caractérisé en ce qu'**il comprend deux capteurs de rayonnement (6, 6a), chaque capteur étant placé, par rapport au support (3, 17, 18) pour le porte-filtre à identifier, de manière que, quand ce dernier est placé sur le support, des portions respectives (10, 11, 15) de l'au moins une buse de distribution de boisson se trouve dans le champ de vision (9, 9a) de l'appareil optique (8, 8a) d'un capteur respectif desdits deux capteurs.

5. Dispositif selon la revendication 1, **caractérisé en ce que** ledit capteur de rayonnement (6, 6a) comprend une pluralité d'éléments sensibles au rayonnement de chaleur (108).

6. Dispositif magnétique selon la revendication 5, **caractérisé en ce que** lesdits éléments sensibles au rayonnement de chaleur (108) sont du type thermopile.

7. Appareil pour la mouture et le dosage de café comprenant un dispositif pour l'identification d'un porte-filtre d'une machine à café expresso dans laquelle ledit dispositif est caractérisé selon l'une quelconque des revendications 1 à 6.

8. Machine à café expresso comprenant un dispositif pour l'identification d'un porte-filtre de la machine à café expresso dans laquelle ledit dispositif est caractérisé selon l'une quelconque des revendications 1 à 6.
